# EUROPEAN PATENT SPECIFICATION

(11) **EP 4 459 199 B1**
(45) Date of publication and mention of the grant of the patent: **14.01.2026**
(21) Application number: 22924844.8
(22) Date of filing: 04.02.2022
(51) Int. Cl.: F24F 11/38, G05B 17/02, G05B 23/02

(54) **FAILURE DIAGNOSIS DEVICE, FAILURE DIAGNOSIS METHOD, AND FAILURE DIAGNOSIS PROGRAM**
FEHLERDIAGNOSEVORRICHTUNG, FEHLERDIAGNOSEVERFAHREN UND FEHLERDIAGNOSEPROGRAMM
DISPOSITIF DE DIAGNOSTIC DE DÉFAILLANCE, PROCÉDÉ DE DIAGNOSTIC DE DÉFAILLANCE ET PROGRAMME DE DIAGNOSTIC DE DÉFAILLANCE

(43) Date of publication of application: 06.11.2024
(73) Proprietor: MITSUBISHI ELECTRIC CORPORATION, Chiyoda-ku Tokyo 100-8310 (JP)
(72) Inventor: MIYAKE, Nobuyuki, Tokyo 100-8310 (JP)
(74) Representative: Pfenning, Meinig & Partner mbB
(86) International application number: PCT/JP2022/004502
(87) International publication number: WO 2023/148934

(56) References cited:
- CN-A- 112 836 396
- JP-A- 2005 207 644
- JP-A- 2006 343 063
- JP-A- 2018 055 299
- JP-A- 2021 089 116
- US-A1- 2005 240 382
- US-A1- 2019 384 240

## Description

### Technical Field

The present disclosure relates to a failure diagnosis apparatus, a failure diagnosis method, and a failure diagnosis program.

### Background Art

In order for a maintenance worker to specify a failure cause of an air conditioner, it is preferable that the maintenance worker have a high technical skill. However, there is a case where a new maintenance worker or the like specifies the failure cause due to a labor shortage or the like. Further, especially in an emerging country or the like, there is often a problem with a technical skill of a maintenance worker due to a reason such that the maintenance worker does not stay for a long term. Thus, a technique is used in which specification of a failure cause, selection of a part, or the like is automatically executed using operation data or the like of the air conditioner.

The operation data of the air conditioner used to specify the failure cause depends on customer environment factors. Here, specific examples of the customer environment factors are factors such as a length of a pipe connected to an outdoor unit, a size of a room in which the air conditioner is installed, an outdoor air temperature, and the like. Therefore, a method set in advance as a method to specify the failure cause may not function appropriately. Accordingly, it is necessary to calibrate an air conditioner model according to the customer environment factors.

Patent Literature 1 discloses a technique to update a control subject model according to an error between a control subject apparatus and the control subject model.

Patent Literature 2 discloses an evaluation apparatus. The apparatus includes a storage unit that stores a model modeling a state of a facility provided in a plant, a simulator that adjusts a parameter that is set in the model so that a difference between an actual measurement value based on a process value of the facility in a first state and a first simulate value calculated by using the model is equal to or less than a threshold, and an estimation unit that estimates a first estimated operating point that indicates an operation state of the facility in the first state based on the adjusted parameter.

### Citation List

### Patent Literature

Patent Literature 1: pamphlet of WO 2014/155596 A1
Patent Literature 2: pamphlet of US 2019/0384240 A1

### Summary of Invention

### Technical Problem

Patent Literature 1 discloses a technique to reduce the number of parameters to be identified by adjusting among parameters of the control subject model, only a variable parameter indicating an amount by which its value may change during operation of the control subject apparatus. However, when the air conditioner model is calibrated using the technique disclosed in Patent Literature 1, there is a problem that the calibration of the air conditioner model requires a massive time since the air conditioner model has the large number of parameters.

The present disclosure aims to shorten the time required for the calibration of the air conditioner model.

### Solution to Problem

The present invention is defined by the appended set of claims. A failure diagnosis apparatus according to the present disclosure that calibrates an air conditioner model by adjusting a value of a parameter of the air conditioner model used when a simulation of operation of an air conditioner is executed, the failure diagnosis apparatus includes
a parameter selection unit to select from among parameters of the air conditioner model, each parameter that forms an adjustment parameter group that consists of at least one parameter whose value is a candidate to be adjusted when the air conditioner model is calibrated based on a condition according to a state of the air conditioner.

### Advantageous Effects of Invention

According to the present disclosure, a parameter selection unit selects from among parameters of an air conditioner model, at least one parameter whose value is a candidate to be adjusted when the air conditioner model is calibrated based on a condition according to a state of an air conditioner. Accordingly, according to the present disclosure, the number of calibration subject parameters of the air conditioner model can be reduced and a time required for the calibration can be shortened.

### Brief Description of Drawings

Fig. 1 is a diagram illustrating a configuration example of a failure diagnosis system 90 according to Embodiment 1.
Fig. 2 is a diagram for explaining a parameter definition DB 193 according to Embodiment 1.
Fig. 3 is a diagram for explaining an outline of the failure diagnosis system 90 according to Embodiment 1.
Fig. 4 is a diagram illustrating a hardware configuration example of a failure diagnosis apparatus 100 according to Embodiment 1.
Fig. 5 is a diagram for explaining processing of the failure diagnosis apparatus 100 according to Embodiment 1.
Fig. 6 is a diagram for explaining the processing of the failure diagnosis apparatus 100 according to Embodiment 1.
Fig. 7 is a flowchart illustrating operation of the failure diagnosis apparatus 100 according to Embodiment 1.
Fig. 8 is a diagram for explaining the processing of the failure diagnosis apparatus 100 according to Embodiment 1.
Fig. 9 is a flowchart illustrating the operation of the failure diagnosis apparatus 100 according to Embodiment 1.
Fig. 10 is a diagram for explaining the processing of the failure diagnosis apparatus 100 according to Embodiment 1.
Fig. 11 is a diagram for explaining the processing of the failure diagnosis apparatus 100 according to Embodiment 1.
Fig. 12 is a diagram for explaining the processing of the failure diagnosis apparatus 100 according to Embodiment 1.
Fig. 13 is a diagram illustrating a hardware configuration example of the failure diagnosis apparatus 100 according to a modification of Embodiment 1.
Fig. 14 is a diagram illustrating a configuration example of the failure diagnosis system 90 according to Embodiment 2.
Fig. 15 is a flowchart illustrating the operation of the failure diagnosis apparatus 100 according to Embodiment 2.

### Description of Embodiments

In the description and drawings of embodiments, the same elements and corresponding elements are denoted by the same reference sign. The description of elements denoted by the same reference sign will be suitably omitted or simplified. Arrows in the drawings mainly indicate flows of data or flows of processing. Further, "unit" may be suitably interpreted as "circuit", "step", "procedure", "process", or "circuitry".

### Embodiment 1.

The present embodiment will be described below in detail with reference to the drawings.

### *** Description of Configuration ***

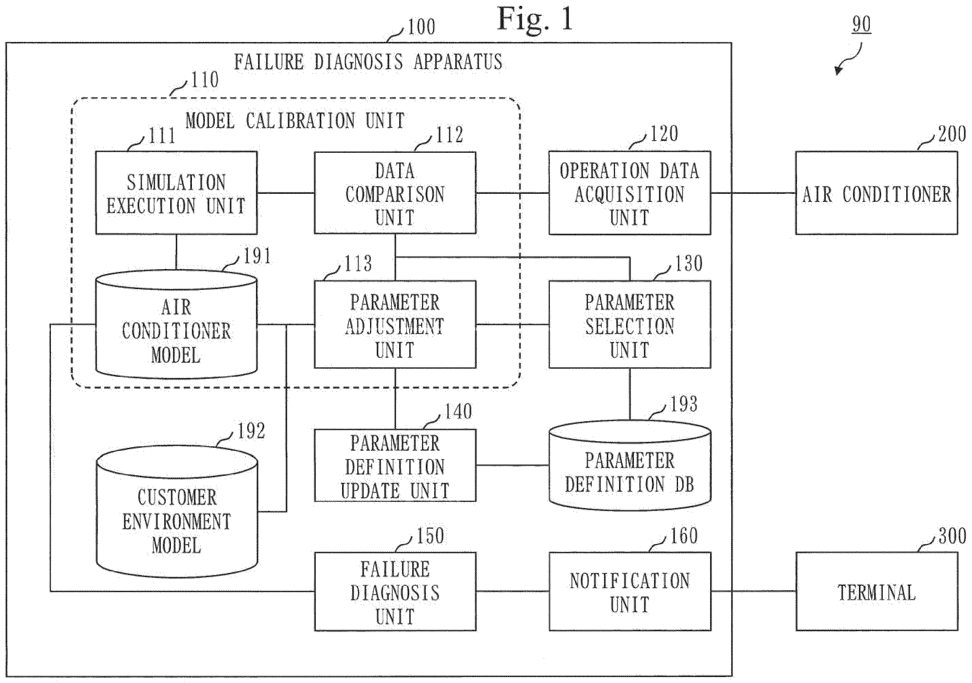

Fig. 1 illustrates a configuration example of a failure diagnosis system 90 according to the present embodiment. As illustrated in Fig. 1, the failure diagnosis system 90 includes a failure diagnosis apparatus 100, an air conditioner 200, and a terminal 300.

The failure diagnosis apparatus 100 includes a model calibration unit 110, an operation data acquisition unit 120, a parameter selection unit 130, a parameter definition update unit 140, a failure diagnosis unit 150, and a notification unit 160. Further, the failure diagnosis apparatus 100 stores an air conditioner model 191, a customer environment model 192, and a parameter definition database (DB) 193. The failure diagnosis apparatus 100 calibrates the air conditioner model 191 by adjusting a value of a parameter of the air conditioner model 191.

The model calibration unit 110 includes a simulation execution unit 111, a data comparison unit 112, a parameter adjustment unit 113, and the air conditioner model 191. The model calibration unit 110 calibrates the air conditioner model 191 to conform to the actual air conditioner 200 corresponding to the air conditioner model 191, by repeating a simulation and the adjustment of the parameter of the air conditioner model 191 until an estimation value of the parameter of the air conditioner model 191 converges.

The simulation execution unit 111 executes the simulation of operation of the air conditioner 200, using a simulator and the air conditioner model 191. The simulator is a tool that executes the simulation of the operation of the air conditioner 200, using the air conditioner model 191.

The data comparison unit 112 compares operation data generated by the simulation execution unit 111 with operation data acquired by the operation data acquisition unit 120.

In a case where a state of the air conditioner 200 is a state in which the air conditioner 200 is assumed to have a failure, the parameter adjustment unit 113 may use a parameter value indicated in the customer environment model 192, as an initial value at a time of the calibration of the air conditioner model 191. A specific example of the state in which the air conditioner 200 is assumed to have the failure is an abnormal state.

The operation data acquisition unit 120 acquires from the air conditioner 200, the operation data of the air conditioner 200. The operation data acquisition unit 120 may acquire the operation data locally using a wire or wirelessly, or may acquire the operation data remotely through the Internet or the like.

The parameter selection unit 130 refers to the parameter definition DB 193 to select a parameter of the air conditioner model 191, as an adjustment subject, based on a condition according to the state of the air conditioner 200. That is, the parameter selection unit 130 refers to the parameter definition DB 193 to select from among parameters of the air conditioner model 191, each parameter that forms an adjustment parameter group, based on the condition according to the state of the air conditioner 200. The adjustment parameter group includes at least one parameter whose value is a candidate to be adjusted when the air conditioner model 191 is calibrated. A specific example of the condition according to the state of the air conditioner 200 is a normal state or the abnormal state. A specific example of the normal state is a time when the air conditioner 200 operates normally and the calibration of the air conditioner model 191 converges normally. The abnormal state is a time other than the normal state, and a specific example of the abnormal state is a time when the calibration of the air conditioner model 191 does not converge normally or is a time when an abnormality is reported from the air conditioner 200.

Further, when a difference between the operation data of the air conditioner 200 indicated in a result of executing the calibrated simulation and the actual operation data of the air conditioner 200 corresponding to the calibrated simulation is equal to or greater than a threshold value, the parameter selection unit 130 selects each parameter that forms an additional parameter group, from parameters other than the parameter that forms the adjustment parameter group among the parameters of the air conditioner model 191, and adds to the adjustment parameter group, each parameter that forms the additional parameter group. Here, the calibrated simulation is the simulation of the operation of the air conditioner 200, using the air conditioner model 191 calibrated by adjusting a value of each parameter that forms the adjustment parameter group. The additional parameter group includes at least one parameter whose value is a candidate to be adjusted when the air conditioner model 191 is calibrated. The actual operation data of the air conditioner 200 corresponding to the calibrated simulation is operation data generated by the air conditioner 200 which is a simulation subject in the calibrated simulation.

When a value of any parameter that forms the additional parameter group has been adjusted, the parameter definition update unit 140 adds to the parameter definition DB 193, each parameter whose value has been adjusted and that forms the additional parameter group, as an adjustment parameter corresponding to a condition corresponding to the calibrated simulation.

The failure diagnosis unit 150 diagnoses the failure in the air conditioner 200, based on a result of calibrating the air conditioner model 191.

The notification unit 160 notifies the terminal 300 of a result of diagnosing the failure in the air conditioner 200 by the failure diagnosis unit 150.

The air conditioner model 191 is a mathematical model that assumes an operation environment of the air conditioner 200, and is a mathematical model used when the simulation of the operation of the air conditioner 200 is executed.

The customer environment model 192 is the air conditioner model 191 corresponding to the air conditioner 200 owed by a customer. The failure diagnosis apparatus 100 holds the calibrated air conditioner model 191 as the customer environment model 192. The failure diagnosis apparatus 100 may prepare the customer environment model 192 for each customer. The customer environment model 192 may be the air conditioner model 191 calibrated in a case where the state of the air conditioner 200 is a state in which the air conditioner 200 is assumed to have no failure. A specific example of the state in which the air conditioner 200 is assumed to have no failure is the normal state.

The parameter definition DB 193 is a database that records at least one adjustment parameter. The adjustment parameter is a parameter corresponding to each condition according to the state of the air conditioner 200, is a parameter of the air conditioner model 191, and is a parameter which is a candidate to be adjusted when the air conditioner model 191 is calibrated. The parameter definition DB 193 may record information indicating a possible range of a value of each adjustment parameter.

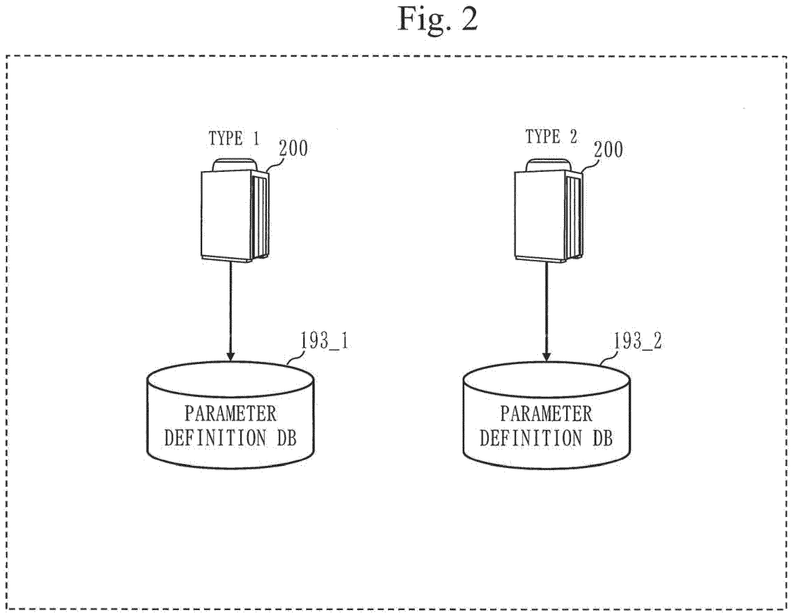

As illustrated in Fig. 2, the parameter definition DB 193 may be prepared for each type of the air conditioner 200 or for each condition such as a customer environment. Specific examples of the customer environment include a location of a building and a climate at the location. A parameter definition DB 193_1 corresponding to a type 1 and a parameter definition DB 193_2 corresponding to a type 2 are prepared in Fig. 2. When a plurality of parameter definition DBs 193 are prepared, the parameter selection unit 130 and the parameter definition update unit 140 suitably select the parameter definition DB 193 according to a condition.

Specific examples of a parameter which is possible to be the adjustment subject during the calibration of the air conditioner model 191 include a parameter of each component used for the air conditioner 200 and a relation parameter other than the air conditioner 200. Specific examples of a parameter of each of components used for the air conditioner 200 include a parameter of an accumulator, a parameter of a heat exchanger, a parameter indicating performance of a compressor, a parameter indicating a thermal conductivity, a parameter indicating an evaporation temperature, a parameter indicating a condensation temperature, a parameter indicating a pipe length, a parameter indicating a type of a refrigerant, a parameter indicating a property of a refrigerant, and a parameter indicating an enclosing refrigerant amount. Specific examples of information that is not possible to be the adjustment subject during the calibration of the air conditioner model 191 include information indicating a control sequence of the air conditioner 200 and information indicating a connection relation between each of the components. Specific examples of the information indicating the connection relation between each of the components include information indicating the connection relation between an outdoor unit, an indoor unit, and a pipe, information indicating the connection relation between an accumulator, a heat exchanger, a compressor, a valve, and the like, in the outdoor unit, and information indicating the connection relation between a heat exchanger and a valve in the indoor unit.

The air conditioner 200 communicates with the failure diagnosis apparatus 100. The air conditioner 200 is typically owned by a customer.

The terminal 300 is a device that communicates with the failure diagnosis apparatus 100, and a specific example of the terminal 300 is a Personal Computer (PC) or a tablet terminal.

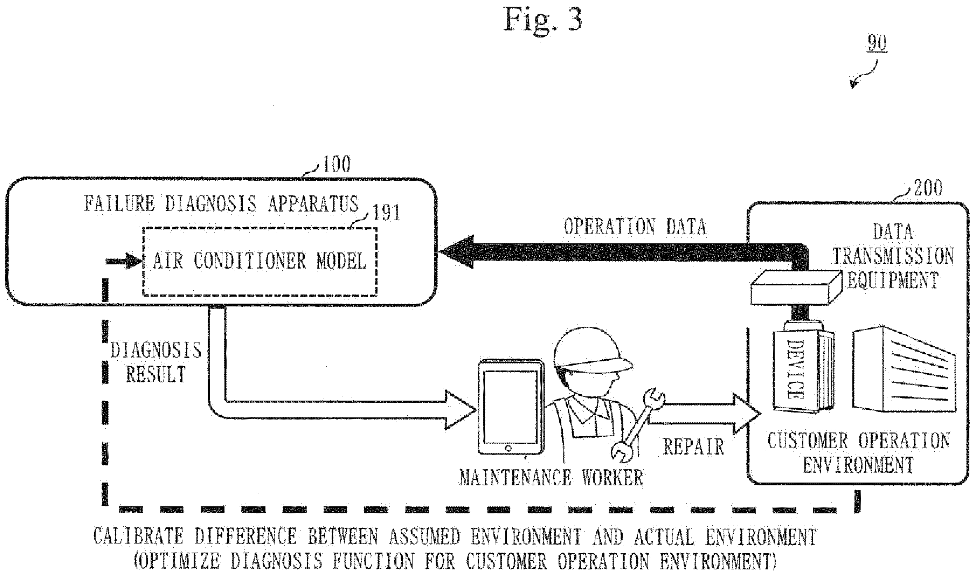

Fig. 3 is a diagram for explaining an outline of the failure diagnosis system 90.

The air conditioner 200 includes data transmission equipment. Here, the customer operation environment is an environment in which the air conditioner 200 operates. The actual environment is an environment in which the air conditioner 200 actually operates. **In** the customer operation environment, unknown factors are factors such as a pipe length connected to the outdoor unit, a size of a room, and an outdoor air temperature. Since these unknown factors may affect a failure diagnosis of the air conditioner 200, the failure diagnosis apparatus 100 calibrates the air conditioner model 191.

The failure diagnosis apparatus 100 refers to the operation data of the air conditioner 200 to calibrate the air conditioner model 191.

Further, when a failure occurs in the air conditioner 200, the failure diagnosis apparatus 100 diagnoses the failure in the air conditioner 200, using the calibrated air conditioner model 191, and notifies the terminal 300 owned by a maintenance worker of information indicating a result of the diagnosis. The maintenance worker repairs the air conditioner 200 based on the information notified by the terminal 300.

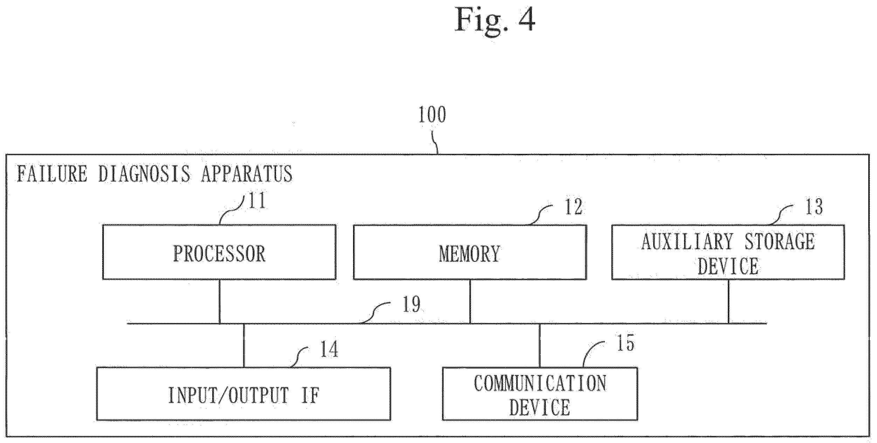

Fig. 4 illustrates a hardware configuration example of the failure diagnosis apparatus 100 according to the present embodiment. The failure diagnosis apparatus 100 includes a computer. The failure diagnosis apparatus 100 may include a plurality of computers.

As illustrated in the present diagram, the failure diagnosis apparatus 100 is the computer that includes pieces of hardware such as a processor 11, a memory 12, an auxiliary storage device 13, an input/output Interface (IF) 14, and a communication device 15. These pieces of hardware are suitably connected via signal lines 19.

The processor 11 is an Integrated Circuit (IC) that performs arithmetic processing and controls the hardware included in the computer. A specific example of the processor 11 is a Central Processing Unit (CPU), a Digital Signal Processor (DSP), or a Graphics Processing Unit (GPU).

The failure diagnosis apparatus 100 may include a plurality of processors in place of the processor 11. The plurality of processors share the role of the processor 11.

The memory 12 is typically a volatile storage device. The memory 12 is also referred to as a main storage device or a main memory. A specific example of the memory 12 is a Random Access Memory (RAM). Data stored in the memory 12 is saved in the auxiliary storage device 13 as necessary.

The auxiliary storage device 13 is typically a non-volatile storage device. A specific example of the auxiliary storage device 13 is a Read Only Memory (ROM), a Hard Disk Drive (HDD), or a flash memory. Data stored in the auxiliary storage device 13 is loaded into the memory 12 as necessary.

The memory 12 and the auxiliary storage device 13 may be configured integrally.

The input/output IF 14 is a port to which an input device and an output device are connected. A specific example of the input/output IF 14 is a Universal Serial Bus (USB) terminal. Specific examples of the input device are a keyboard and a mouse. A specific example of the output device is a display.

The communication device 15 is a receiver and a transmitter. A specific example of the communication device 15 is a communication chip or a Network Interface Card (NIC).

When communicating with another device or the like, each of the units of the failure diagnosis apparatus 100 may suitably use the input/output IF 14 and the communication device 15.

The auxiliary storage device 13 stores a failure diagnosis program. The failure diagnosis program is a program that causes the computer to implement a function of each of the units included in the failure diagnosis apparatus 100. The failure diagnosis program is loaded into the memory 12, and executed by the processor 11. The function of each of the units included in the failure diagnosis apparatus 100 is implemented by software.

Data used when the failure diagnosis program is executed, and data and the like obtained by executing the failure diagnosis program are suitably stored in the storage device. Each of the units of the failure diagnosis apparatus 100 uses the storage device suitably. The storage device includes at least one of the memory 12, the auxiliary storage device 13, a register in the processor 11, and a cache memory in the processor 11, as an example. Note that data and information may have the same meaning. The storage device may be independent of the computer.

Functions of the memory 12 and the auxiliary storage device 13 may be implemented by another storage device.

The fault diagnosis program may be recorded in a computer readable non-volatile recording medium. A specific example of the non-volatile recording medium is an optical disc or a flash memory. The failure diagnosis program may be provided as a program product.

### *** Description of Operation ***

An operation procedure of the failure diagnosis apparatus 100 is equivalent to a failure diagnosis method. Further, a program that implements operation of the failure diagnosis apparatus 100 is equivalent to the failure diagnosis program.

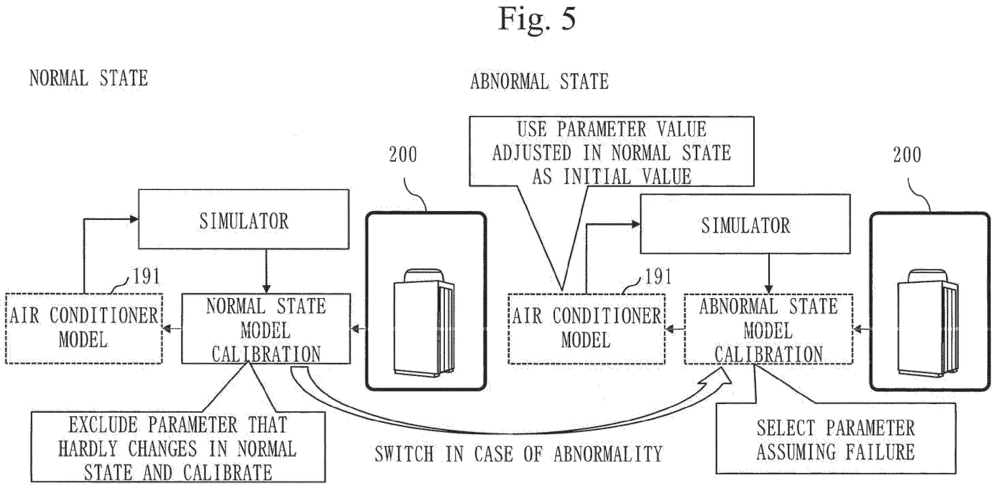

Fig. 5 is a diagram for explaining processing of the failure diagnosis apparatus 100.

In the normal state, the failure diagnosis apparatus 100 excludes from a calibration subject parameter during the model calibration, a parameter whose value hardly changes in the normal state, among the parameters of the air conditioner model 191, and calibrates the air conditioner model 191 by adjusting values of remaining parameters. In the normal state, the failure diagnosis apparatus 100 adjusts within a range that does not cause a problem, only values of unknown parameters such as a pipe length and an outdoor air temperature, and a value of a parameter including an error of such as a refrigerant amount, as a specific example.

In the abnormal state, first, the failure diagnosis apparatus 100 switches a parameter whose value is to be adjusted in the calibration of the air conditioner model 191. The parameter whose value is to be adjusted in the abnormal state is a parameter selected based on the assumption of the failure in the air conditioner 200. After that, the failure diagnosis apparatus 100 calibrates the air conditioner model 191, using a parameter value indicated in the air conditioner model 191 calibrated in the normal state, as the initial value. It is expected that the calibration of the air conditioner model 191 converges more quickly, by using the parameter value indicated in the air conditioner model 191 calibrated in the normal state, as the initial value.

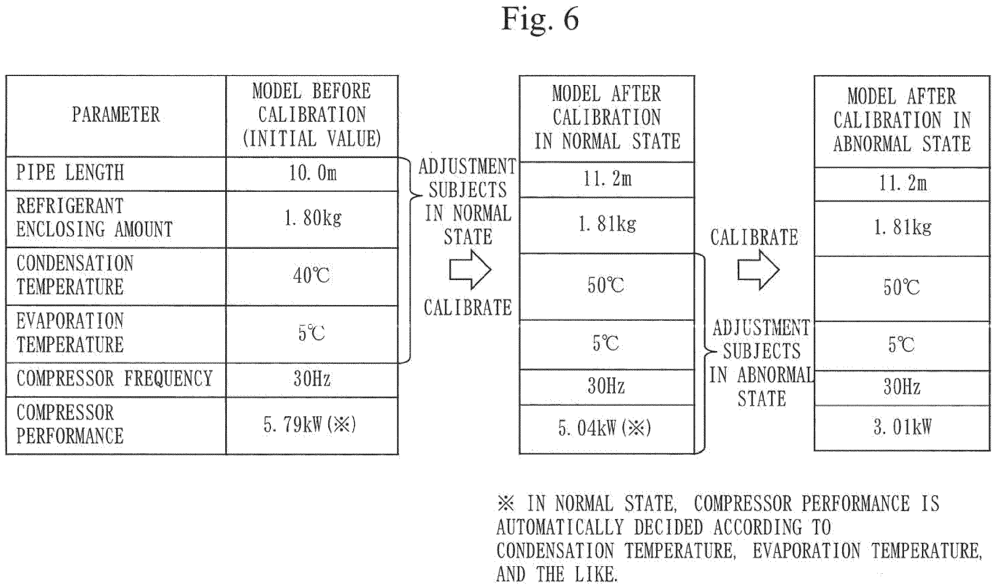

Fig. 6 is a diagram for explaining the processing of the failure diagnosis apparatus 100 with reference to a specific example.

**In** the normal state, the failure diagnosis apparatus 100 calibrates the air conditioner model 191 by adjusting each of the values of the parameters which are the adjustment subjects in the normal state, using the parameter values indicated in the air conditioner model 191 before the calibration, as the initial values. **In** the present example, the parameter adjustment unit 113 does not directly adjust the value of "compressor performance" in the normal state, but automatically decides the value of "compressor performance" according to "condensation temperature", "evaporation temperature", and the like.

**In** the abnormal state, the failure diagnosis apparatus 100 calibrates the air conditioner model 191 by adjusting each of the values of the parameters which are the adjustment subjects in the abnormal state, using the parameter values indicated in the air conditioner model 191 before the calibration, as the initial values.

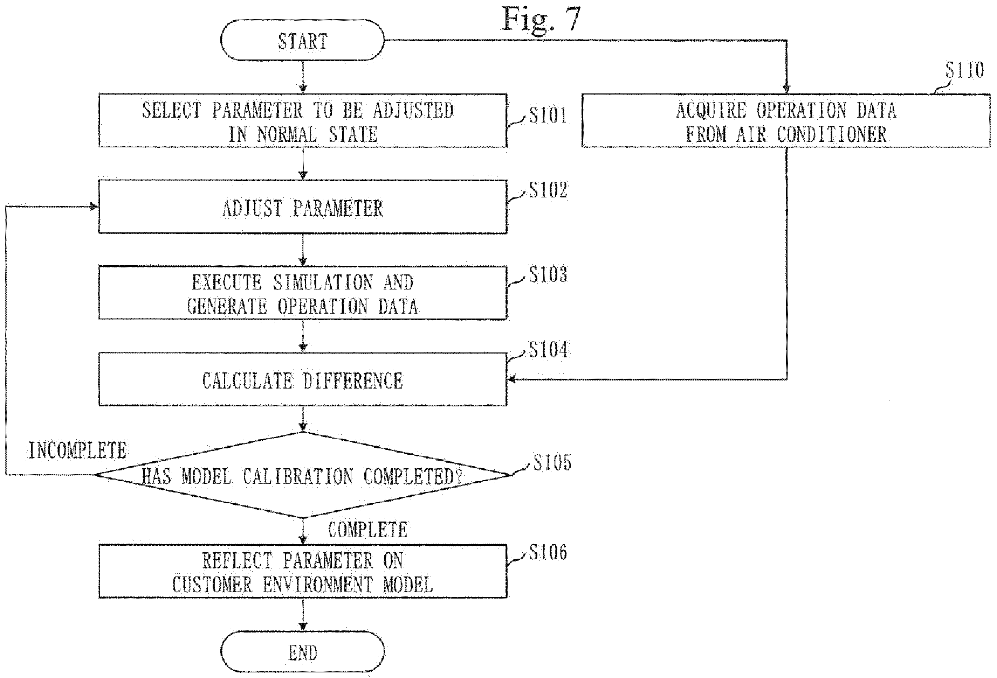

Fig. 7 is a flowchart illustrating an example of the operation of the failure diagnosis apparatus 100 in the normal state. The operation of the failure diagnosis apparatus 100 in the normal state will be described with reference to Fig. 7.

### (Step S101)

The parameter selection unit 130 refers to the parameter definition **DB** 193 to select a parameter whose value is to be adjusted in the normal state. Each parameter selected in the present step corresponds to a parameter that forms the adjustment parameter group.

### (Step S102)

The parameter adjustment unit 113 suitably adjusts the value of the parameter selected by the parameter selection unit 130 among the parameters of the air conditioner model 191. At this time, the parameter adjustment unit 113 may adjust the value of the parameter based on any optimization method. The parameter adjustment unit 113 may adjust only values of some parameters among the parameters selected by the parameter selection unit 130.

When executing the present step for the first time, the parameter adjustment unit 113 reads the air conditioner model 191, sets a parameter value indicated in the read air conditioner model 191 as the initial value, and suitably adjusts the initial value. Otherwise, the parameter adjustment unit 113 further suitably adjusts a value of a parameter that has been adjusted when the present step has been previously executed.

### (Step S103)

The simulation execution unit 111 generates the operation data of the air conditioner 200 by executing the simulation of the operation of the air conditioner 200, using the simulator and the air conditioner model 191 whose parameter value has been adjusted by the parameter adjustment unit 113.

### (Step S104)

The data comparison unit 112 calculates a difference between the operation data generated by the simulation execution unit 111 and the operation data acquired by the operation data acquisition unit 120. The data comparison unit 112 may calculate the difference between these pieces of operation data in any manner.

### (Step S105)

When the calibration of the air conditioner model 191 has completed, the model calibration unit 110 proceeds to step S106. Otherwise, the model calibration unit 110 proceeds to step S102.

The model calibration unit 110 may determine whether or not the calibration of the air conditioner model 191 has completed by determining whether or not the difference calculated by the data comparison unit 112 is less than or equal to a threshold value, or by determining whether or not the number of execution of repetitive processes from step S102 to step S104 has reached a predetermined value.

### (Step S106)

The parameter adjustment unit 113 reflects a result of calibrating the air conditioner model 191 on the customer environment model 192. Specifically, the parameter adjustment unit 113 saves in the customer environment model 192, the value of the parameter adjusted when the air conditioner model 191 is calibrated.

### (Step S110)

The operation data acquisition unit 120 acquires from the air conditioner 200, the operation data of the air conditioner 200.

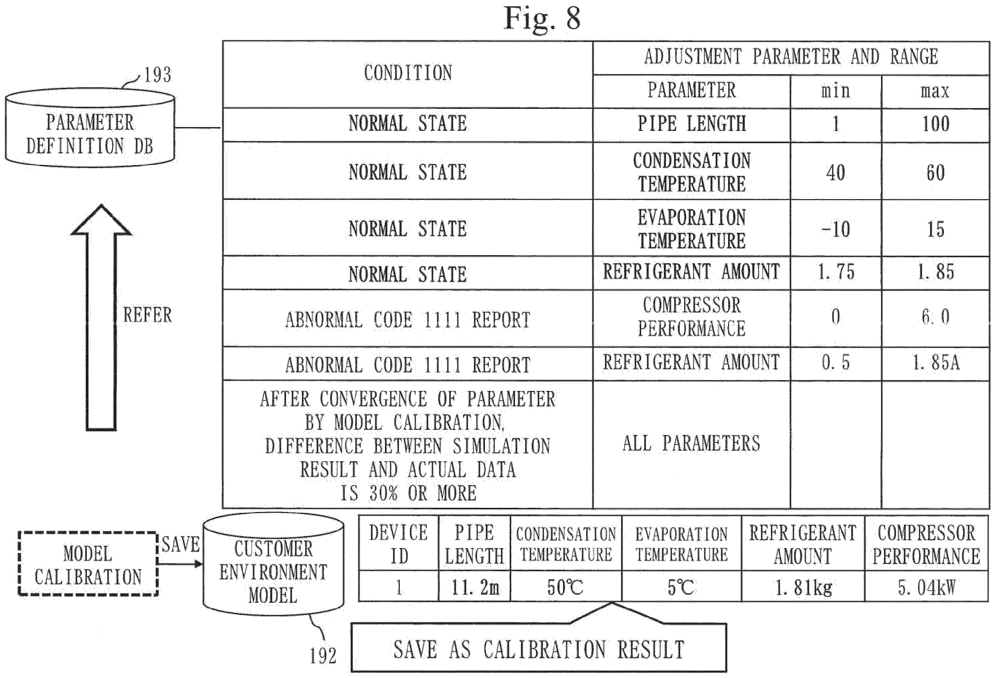

Fig. 8 is a diagram for explaining the processing of the failure diagnosis apparatus 100 in the normal state with reference to a specific example. In the present example, the parameter definition DB 193 indicates each of "pipe length", "condensation temperature", "evaporation temperature", and "refrigerant amount", as parameters to be adjusted in the normal state.

Accordingly, the parameter adjustment unit 113 adjusts each of values of "pipe length", "condensation temperature", "evaporation temperature" and "refrigerant amount", in the calibration of the air conditioner model 191. Further, the parameter adjustment unit 113 saves in the customer environment model 192, each of the adjusted values of "pipe length", "condensation temperature", "evaporation temperature", and "refrigerant amount", as a calibration result.

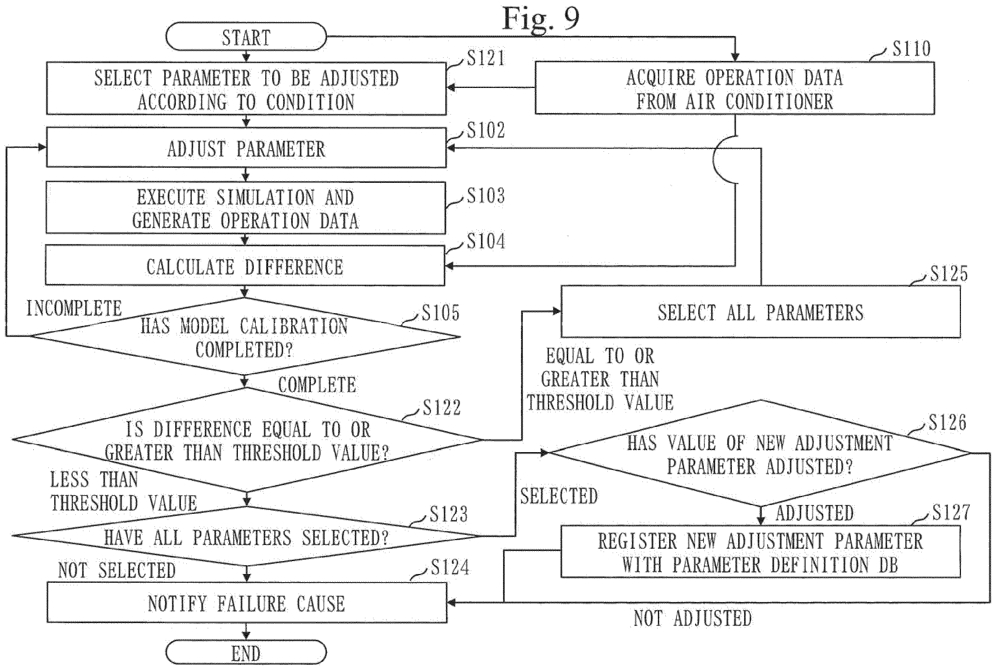

Fig. 9 is a flowchart illustrating an example of the operation of the failure diagnosis apparatus 100 in a diagnosis state. The operation of the failure diagnosis apparatus 100 in the diagnosis state will be described with reference to Fig. 9. The diagnosis state is one mode of the abnormal state, and is a time when the air conditioner 200 is necessary to be diagnosed.

### (Step S121)

The parameter selection unit 130 refers to the parameter definition DB 193 to select a parameter to be adjusted in the diagnosis state, based on the condition according to the state of the air conditioner 200. Each parameter selected in the present step corresponds to a parameter that forms the adjustment parameter group.

### (Step S122)

The data comparison unit 112 calculates a difference between the operation data corresponding to the calibrated air conditioner model 191 and the operation data acquired by the operation data acquisition unit 120.

When the calculated difference is equal to or greater than a threshold value, the failure diagnosis apparatus 100 proceeds to step S125. Otherwise, the failure diagnosis apparatus 100 proceeds to step S123.

### (Step S123)

When all of the parameters of the air conditioner model 191 has been selected as parameters whose values are to be adjusted, the failure diagnosis apparatus 100 proceeds to step S126. Otherwise, the failure diagnosis apparatus 100 proceeds to step S124.

### (Step S124)

The failure diagnosis unit 150 diagnoses a failure in the air conditioner 200, using the air conditioner model 191.

The notification unit 160 transmits to the terminal 300, data indicating a result of the diagnosis by the failure diagnosis unit 150.

### (Step S125)

The parameter selection unit 130 refers to the parameter definition DB 193 to select all parameters whose values are possible to be adjusted, from among the parameters of the air conditioner model 191. The parameter selection unit 130 may not select some parameters from among all the parameters.

A parameter that is not included in the adjustment parameter group, among the parameters selected in the present step corresponds to a parameter that forms the additional parameter group. That is, the process of the present step is equivalent to a process of adding to the adjustment parameter group, each parameter that forms the additional parameter group.

### (Step S126)

When each of values of new adjustment parameters has been adjusted by the parameter adjustment unit 113, the failure diagnosis apparatus 100 proceeds to step S127. Here, the new adjustment parameters are parameters other than a parameter indicated in the parameter definition DB 193 as a parameter to be adjusted at a time when the condition according to the state of the air conditioner 200 is the condition in step S121. Further, the new adjustment parameters are included in the additional parameter group. Otherwise, the failure diagnosis apparatus 100 proceeds to step S124.

### (Step S127)

The parameter definition update unit 140 registers with the parameter definition DB 193, each of the new adjustment parameters, as the parameter to be adjusted at a time when the condition according to the state of the air conditioner 200 is the condition in step S121.

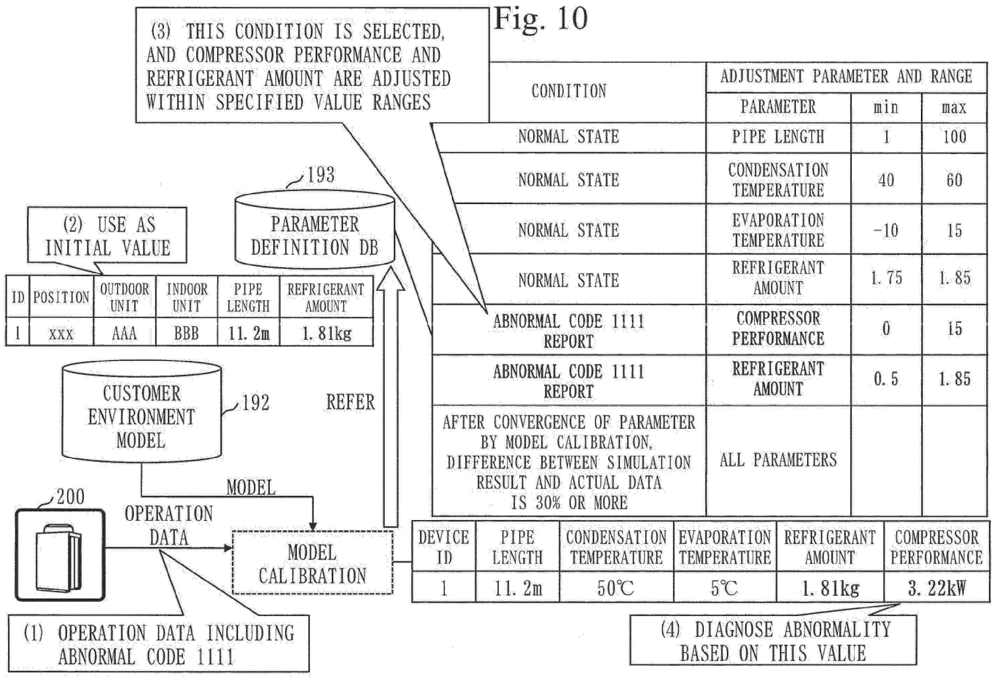

Fig. 10 is a diagram for explaining the processing of the failure diagnosis apparatus 100 in the diagnosis state with reference to a specific example. The processes in the present example will be described in order.

First, the air conditioner 200 transmits to the failure diagnosis apparatus 100, operation data including "abnormal code 1111". "Abnormal code 1111" is a specific example of data indicating that the air conditioner 200 has an abnormality.

Next, since the air conditioner 200 has transmitted "abnormal code 1111", the parameter selection unit 130 refers to the parameter definition DB 193 to select "compressor performance" and "refrigerant amount" which are parameters corresponding to "abnormal code 1111 report". Here, "abnormal code 1111 report" is an example in the diagnosis state.

Next, the model calibration unit 110 calibrates the air conditioner model 191 by adjusting each of values of "compressor performance" and "refrigerant amount" within each of ranges of "compressor performance" and "refrigerant amount" indicated in the parameter definition DB 193, using parameter values indicated in the air conditioner model 191 calibrated in the normal state, as the initial values. The initial values are saved in the customer environment model 192, as a specific example. Further, the parameter adjustment unit 113 saves in the customer environment model 192, the parameter values indicated in the calibrated air conditioner model 191.

Next, the failure diagnosis unit 150 diagnoses an abnormality in the air conditioner 200, based on the value of "compressor performance" indicated in the air conditioner model 191 calibrated by the model calibration unit 110.

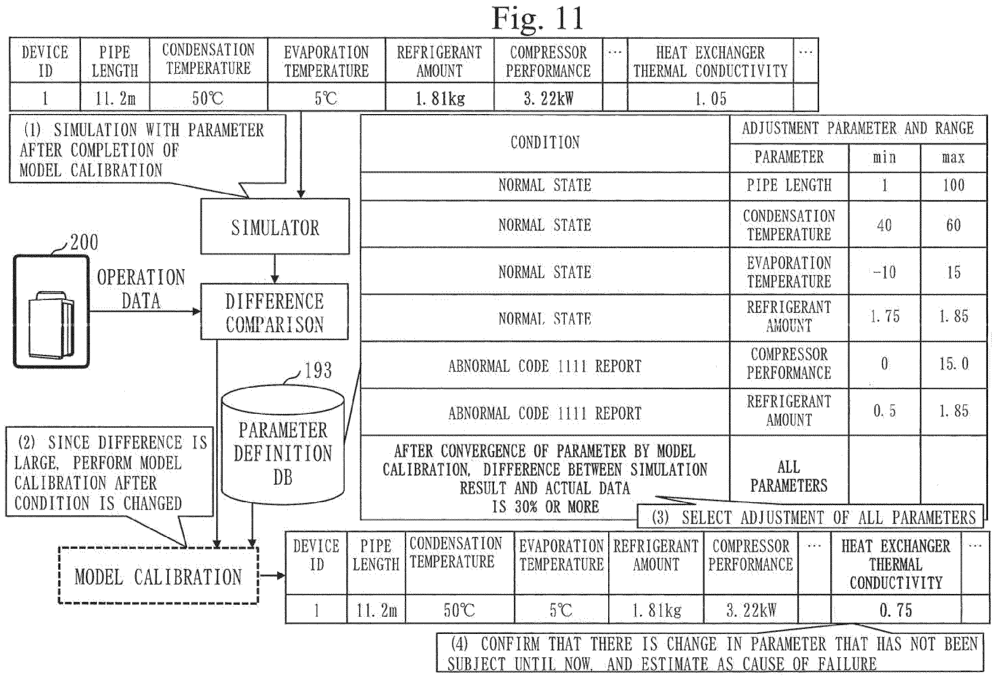

Fig. 11 is a diagram for explaining the processing of the failure diagnosis apparatus 100 in the diagnosis state with reference to a specific example. The present example corresponds to processing that follows the specific example illustrated in Fig. 10. The processing in the present example will be described in order.

First, the simulation execution unit 111 generates a "simulation result" which is operation data by executing the simulation of the operation of the air conditioner 200, using the calibrated air conditioner model 191.

Next, the data comparison unit 112 calculates a difference between "actual data" and the "simulation result". At this time, it is assumed that the size of the calculated difference is 30% or more of the size of the "actual data". Here, the "actual data" is operation data acquired by the operation data acquisition unit 120 from the air conditioner 200. Further, a specific example of the size of the "actual data" is a norm of a vector corresponding to the "actual data". Each of the size of the "simulation result" and the size of the difference is the same as the size of the "actual data".

Next, since the difference between the "actual data" and the "simulation result" is equal to or greater than a threshold value, the parameter selection unit 130 selects all of the parameters of the air conditioner model 191, as parameters that form the adjustment parameter group.

Next, the model calibration unit 110 calibrates the air conditioner model 191 by adjusting the values of all of the parameters.

Next, the failure diagnosis unit 150 confirms that the value of "heat exchanger thermal conductivity" in the calibrated air conditioner model 191 has changed from before the calibration, and estimates that a cause of a failure of the air conditioner 200 relates to "heat exchanger thermal conductivity".

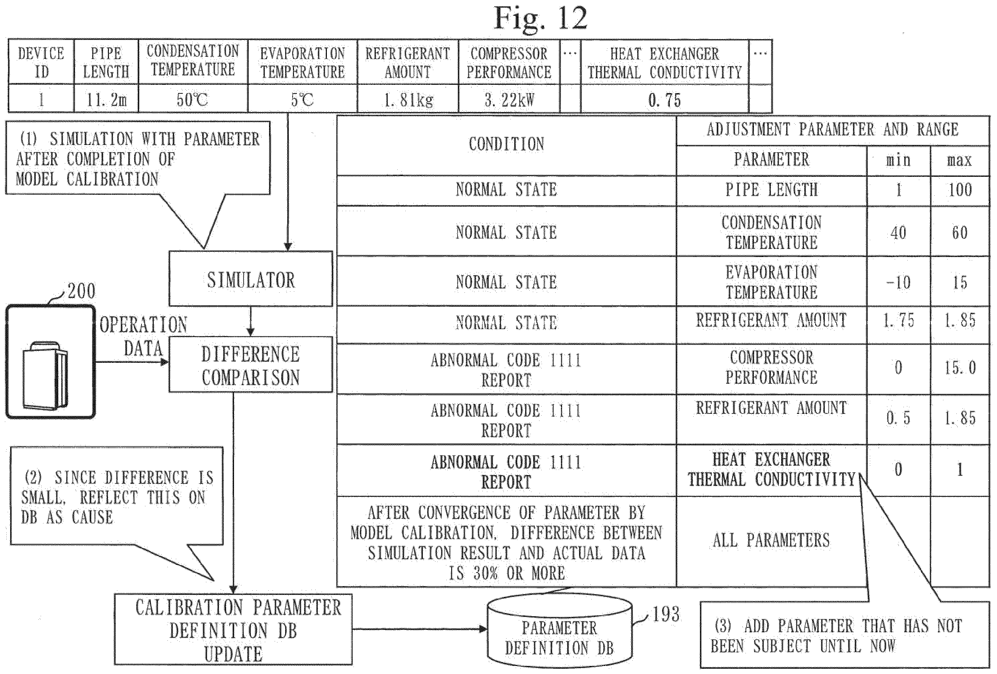

Fig. 12 is a diagram for explaining the processing of the failure diagnosis apparatus 100 in the diagnosis state with reference to a specific example. The preset example corresponds to processing that follows the specific example illustrated in Fig. 11. The processing in the present example will be given in order.

First, the model calibration unit 110 generates the "simulation result" by executing the simulation of the operation of the air conditioner 200, using the calibrated air conditioner model 191. After that, the data comparison unit 112 calculates the difference between the "actual data" and the "simulation result". Here, the calculated difference is assumed to be less than the threshold value.

Next, the parameter definition update unit 140 determines that the reason for the difference between the "actual data" and the "simulation result" being equal to or greater than the threshold value is the value of "heat exchanger thermal conductivity" has not been adjusted since the difference between the "actual data" and the "simulation result" is less than the threshold value by newly adjusting the value of "heat exchanger thermal conductivity". Accordingly, the parameter definition update unit 140 reflects a result of adjusting the value of "heat exchanger thermal conductivity" on the parameter definition DB 193.

As a result, as illustrated in Fig. 12, "heat exchanger thermal conductivity" is added to the parameter definition DB 193, as a parameter to be adjusted in a case where the condition is "abnormal code 1111 report".

### *** Description of Effects of Embodiment 1 ***

As described above, according to the present embodiment, since only values of some of parameters of the air conditioner model 191 are to be adjusted when the air conditioner model 191 is calibrated particularly in a normal state, a time required for calibration of the air conditioner model 191 can be shortened. Further, according to the present embodiment, it is possible to correct a factor that is influenced by a customer environment in a simulation of operation of the air conditioner 200, and at the same time, specify a failure cause of the air conditioner 200, and to provide the specified failure cause to a maintenance worker.

### *** Other Configurations ***

### <Modification 1>

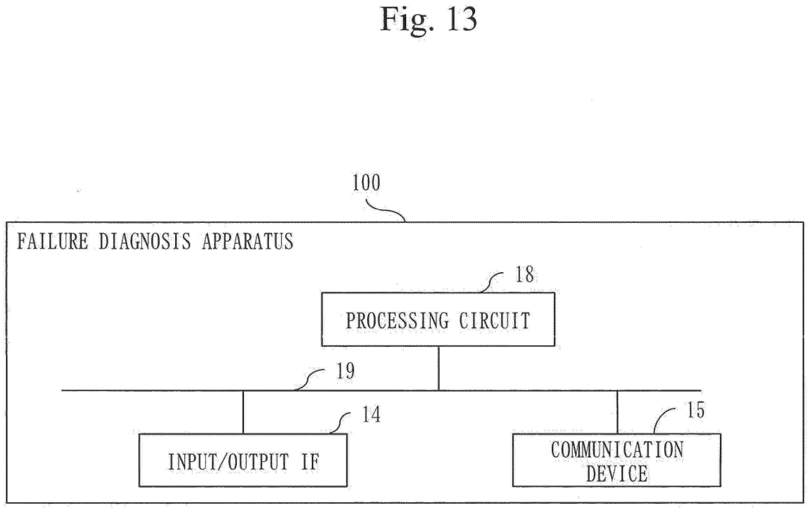

Fig. 13 illustrates a hardware configuration example of the failure diagnosis apparatus 100 according to the present modification.

The failure diagnosis apparatus 100 includes a processing circuit 18 in place of the processor 11, the processor 11 and the memory 12, the processor 11 and the auxiliary storage device 13, or the processor 11, the memory 12, and the auxiliary storage device 13.

The processing circuit 18 is hardware that implements at least a part of each unit included in the failure diagnosis apparatus 100.

The processing circuit 18 may be a dedicated hardware, or may be a processor that executes programs stored in the memory 12.

When the processing circuit 18 is the dedicated hardware, a specific example of the processing circuit 18 is a single circuit, a composite circuit, a programmed processor, a parallel-programmed processor, an Application Specific Integrated Circuit (ASIC), a Field Programmable Gate Array (FPGA), or a combination of thereof.

The failure diagnosis apparatus 100 may include a plurality of processing circuits as an alternative to the processing circuit 18. The plurality of processing circuits share the role of the processing circuit 18.

In the failure diagnosis apparatus 100, some functions may be implemented by dedicated hardware, and the remaining functions may be implemented by software or firmware.

The processing circuit 18 is implemented by, as a specific example, hardware, software, firmware, or a combination of thereof.

The processor 11, the memory 12, the auxiliary storage device 13, and the processing circuit 18 are collectively referred to as "processing circuitry". That is, the functions of the individual functional components of the failure diagnosis apparatus 100 are implemented by the processing circuitry.

The failure diagnosis apparatus 100 according to other embodiments may also have the same configuration as that of the present modification.

### Embodiment 2.

Differences from the above described embodiment will be mainly described below with reference to the drawings.

### *** Description of Configuration ***

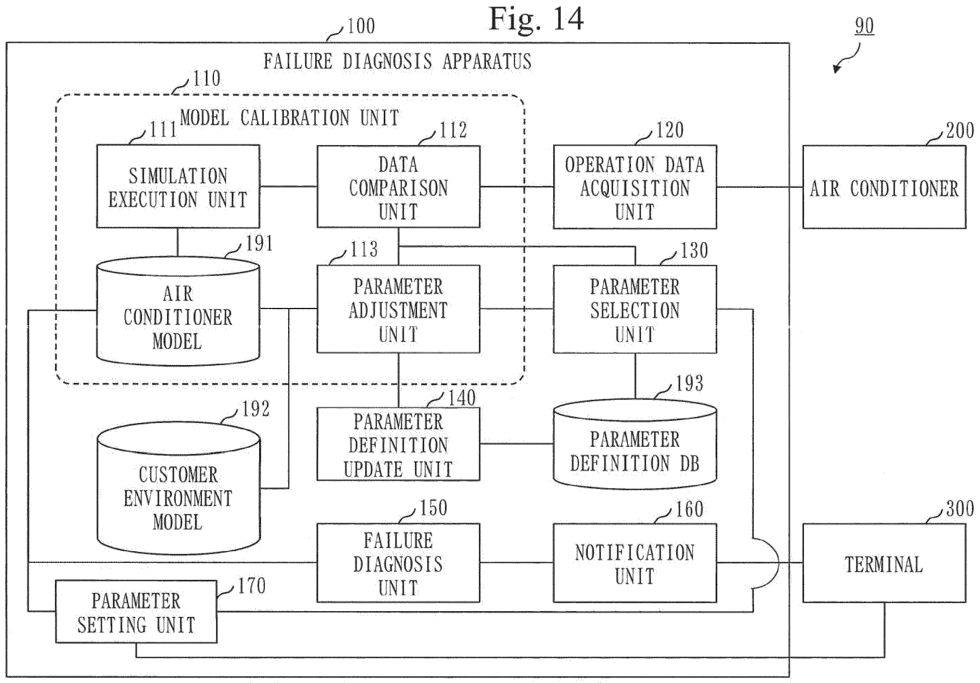

Fig. 14 illustrates a configuration example of the failure diagnosis system 90 according to the present embodiment.

As illustrated in Fig. 14, the failure diagnosis apparatus 100 includes a parameter setting unit 170 in addition to the components included in the failure diagnosis apparatus 100 according to Embodiment 1.

The parameter setting unit 170 sets a value of at least one parameter of the air conditioner model 191. The parameter setting unit 170 may receive a value set by a maintenance worker or the like, or data indicating a parameter file or the like, and may set each of the parameters of the air conditioner model 191 according to the received data.

The calibration of the air conditioner model 191 can be converged more quickly by the maintenance worker or the like setting actual values in the air conditioner 200, as values of some parameters among the parameters of the air conditioner model 191. The maintenance worker or the like may set a value that can be read from a specification or a value that can be measured in an actual environment.

The parameter selection unit 130 according to the present embodiment excludes from the adjustment parameter group, each parameter whose value has been set by the parameter setting unit 170.

### *** Description of Operation ***

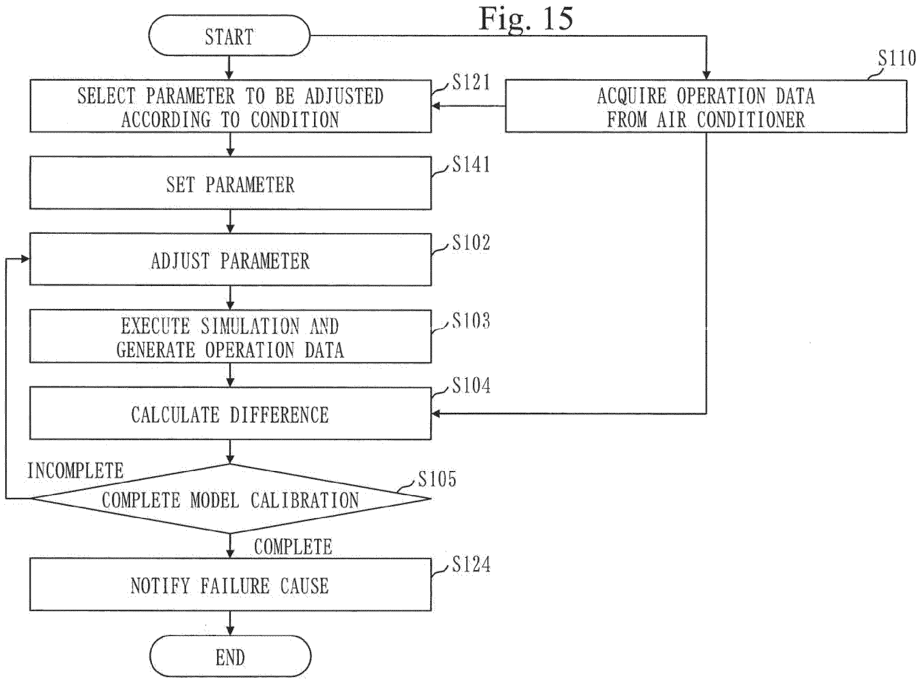

Fig. 15 is a flowchart illustrating an example of the operation of the failure diagnosis apparatus 100. The operation of the failure diagnosis apparatus 100 will be described with reference to Fig. 15.

### (Step S141)

The parameter setting unit 170 receives data indicating a parameter value to be set in the air conditioner model 191, and sets a value of a parameter of the air conditioner model 191 according to the received data. The parameter whose value is to be set by the parameter setting unit 170 may not be a parameter selected by the parameter selection unit 130.

The parameter selection unit 130 excludes from the adjustment parameter group, each parameter whose value has been set by the parameter setting unit 170.

### *** Description of Effects of Embodiment 2 ***

As described above, according to the present embodiment, a value of a parameter of the air conditioner model 191 can be set. Further, when a parameter value in an actual environment has been set in the air conditioner model 191, a time required for calibration of the air conditioner model 191 can be further shortened.

### Reference Signs List

11: processor; 12: memory; 13: auxiliary storage device; 14: input/output IF; 15: communication device; 18: processing circuit; 19: signal line; 90: failure diagnosis system; 100: failure diagnosis apparatus; 110: model calibration unit; 111: simulation execution unit; 112: data comparison unit; 113: parameter adjustment unit; 120: operation data acquisition unit; 130: parameter selection unit; 140: parameter definition update unit; 150: failure diagnosis unit; 160: notification unit; 170: parameter setting unit; 191: air conditioner model; 192: customer environment model; 193: parameter definition DB; 200: air conditioner; 300: terminal.

## Claims

1. A failure diagnosis apparatus (100) that is adapted to calibrate an air conditioner model (191) by adjusting at least one value of at least one parameter of the air conditioner model (191) used when a simulation of operation of an air conditioner (200) is executed, the failure diagnosis apparatus (100) comprising
a parameter selection unit (130) adapted to select from among parameters of the air conditioner model (191), each parameter that forms an adjustment parameter group that consists of at least one parameter whose value is a candidate to be adjusted when the air conditioner model (191) is calibrated based on conditions according to a state of the air conditioner (200), wherein
when selecting each parameter that forms the adjustment parameter group, the parameter selection unit (130) is adapted to refer to a parameter definition database (193) that records at least one adjustment parameter which is a parameter corresponding to each condition according to the state of the air conditioner (200) and which is a parameter whose value is a candidate to be adjusted when the air conditioner model (191) is calibrated, and
when a difference between operation data of the air conditioner (200) indicating a result of executing the calibrated simulation which is the simulation of the operation of the air conditioner (200) using the air conditioner model (191) calibrated by adjusting a value of each parameter that forms the adjustment parameter group and actual operation data of the air conditioner (200) corresponding to the calibrated simulation is equal to or greater than a threshold value, the parameter selection unit (130) is adapted to select from parameters other than the parameters that form the adjustment parameter group among parameters of the air conditioner model (191), each parameter that forms an additional parameter group that consists of at least one parameter whose value is a candidate to be adjusted when the air conditioner model (191) is calibrated, and adds to the adjustment parameter group, each parameter that forms the additional parameter group,
wherein a failure diagnosis unit (150) is adapted to diagnose the failure in the air conditioner (200) based on a result of calibrating the air conditioner model (191).

2. The failure diagnosis apparatus (100) according to claim 1 further comprising
a parameter definition update unit (140), when a value of any parameter that forms the additional parameter group has been adjusted, adapted to add to the parameter definition database (193), each parameter whose value has been adjusted and that forms the additional parameter group, as an adjustment parameter corresponding to a condition according to the calibrated simulation.

3. The failure diagnosis apparatus (100) according to claim 1 or 2 further comprising
a parameter adjustment unit (113) adapted to hold as a customer environment model (192), an air conditioner model (191) calibrated in a case where the state of the air conditioner (200) is a state in which the air conditioner (200) is assumed to have no failure, and
to use a parameter value indicated in the customer environment model (192), as an initial value when the air conditioner model (191) is calibrated in the case where the state of the air conditioner (200) is the state in which the air conditioner (200) is assumed to have no failure.

4. The failure diagnosis apparatus (100) according to any one of claims 1 to 3 further comprising
a parameter setting unit (170) adapted to set a value of at least one parameter of the air conditioner model (191), wherein
the parameter selection unit (130) excludes from the adjustment parameter group, each parameter whose value has been set.

5. A failure diagnosis method that calibrates an air conditioner model (191) by adjusting at least one value of at least one parameter of the air conditioner model (191) used when a simulation of operation of an air conditioner (200) is executed, the failure diagnosis method comprising
by a computer, selecting from among parameters of the air conditioner model (191), each parameter that forms an adjustment parameter group that consists of at least one parameter whose value is a candidate to be adjusted when the air conditioner model (191) is calibrated based on conditions according to a state of the air conditioner (200),
by the computer, when selecting each parameter that forms the adjustment parameter group, referring to a parameter definition database (193) that records at least one adjustment parameter which is a parameter corresponding to each condition according to the state of the air conditioner (200) and which is a parameter whose value is a candidate to be adjusted when the air conditioner model (191) is calibrated, and
by the computer, when a difference between operation data of the air conditioner (200) indicating a result of executing the calibrated simulation which is the simulation of the operation of the air conditioner (200) using the air conditioner model (191) calibrated by adjusting a value of each parameter that forms the adjustment parameter group and actual operation data of the air conditioner (200) corresponding to the calibrated simulation is equal to or greater than a threshold value, selecting from parameters other than the parameters that form the adjustment parameter group among parameters of the air conditioner model (191), each parameter that forms an additional parameter group that consists of at least one parameter whose value is a candidate to be adjusted when the air conditioner model (191) is calibrated, and adding to the adjustment parameter group, each parameter that forms the additional parameter group,
wherein the failure in the air conditioner (200) is diagnosed based on a result of calibrating the air conditioner model (191).

6. A failure diagnosis program for causing a failure diagnosis apparatus (100) which is a computer that calibrates an air conditioner model (191) by adjusting at least one value of at least one parameter of the air conditioner model (191) used when a simulation of operation of an air conditioner (200) is executed, to execute
a parameter selection process to select from among parameters of the air conditioner model (191), each parameter that forms an adjustment parameter group that consists of at least one parameter which is a candidate to be adjusted when the air conditioner model (191) is calibrated based on conditions according to a state of the air conditioner (200), wherein
when selecting each parameter that forms the adjustment parameter group, the parameter selection process refers to a parameter definition database (193) that records at least one adjustment parameter which is a parameter corresponding to each condition according to the state of the air conditioner (200) and which is a parameter whose value is a candidate to be adjusted when the air conditioner model (191) is calibrated, and
when a difference between operation data of the air conditioner (200) indicating a result of executing the calibrated simulation which is the simulation of the operation of the air conditioner (200) using the air conditioner model (191) calibrated by adjusting a value of each parameter that forms the adjustment parameter group and actual operation data of the air conditioner (200) corresponding to the calibrated simulation is equal to or greater than a threshold value, the parameter selection process selects from parameters other than the parameters that form the adjustment parameter group among parameters of the air conditioner model (191), each parameter that forms an additional parameter group that consists of at least one parameter whose value is a candidate to be adjusted when the air conditioner model (191) is calibrated, and adds to the adjustment parameter group, each parameter that forms the additional parameter group,
wherein the failure in the air conditioner (200) is diagnosed based on a result of calibrating the air conditioner model (191).

## Patentansprüche

1. Störungsdiagnosevorrichtung (100), die dazu ausgelegt ist, ein Klimaanlagenmodell (191) zu kalibrieren, indem mindestens ein Wert von mindestens einem Parameter des Klimaanlagenmodells (191) angepasst wird, das verwendet wird, wenn eine Simulation eines Betriebs einer Klimaanlage (200) ausgeführt wird, wobei die Störungsdiagnosevorrichtung (100) umfasst:
eine Parameterauswahleinheit (130), die dazu ausgelegt ist, aus Parametern des Klimaanlagenmodells (191) jeden Parameter auszuwählen, der eine Anpassungsparametergruppe bildet, die aus mindestens einem Parameter besteht, dessen Wert ein Kandidat ist, um angepasst zu werden, wenn das Klimaanlagenmodell (191) auf der Grundlage von Bedingungen gemäß einem Zustand der Klimaanlage (200) kalibriert wird, wobei
bei der Auswahl jedes Parameters, der die Anpassungsparametergruppe bildet, die Parameterauswahleinheit (130) dazu ausgelegt ist, auf eine Parameterdefinitionsdatenbank (193) Bezug zu nehmen, die mindestens einen Anpassungsparameter aufzeichnet, der ein Parameter ist, der jeder Bedingung gemäß dem Zustand der Klimaanlage (200) entspricht, und der ein Parameter ist, dessen Wert ein anzupassender Kandidat ist, wenn das Klimaanlagenmodell (191) kalibriert wird, und
wenn eine Differenz zwischen Betriebsdaten der Klimaanlage (200), die ein Ergebnis der Ausführung der kalibrierten Simulation anzeigen, bei der es sich um die Simulation des Betriebs der Klimaanlage (200) unter Verwendung des Klimaanlagenmodells (191) handelt, das durch Anpassen eines Werts jedes Parameters, der die Anpassungsparametergruppe bildet, kalibriert wurde, und tatsächlichen Betriebsdaten der Klimaanlage (200) entsprechend der kalibrierten Simulation gleich oder größer als ein Schwellenwert ist, die Parameterauswahleinheit (130) dazu ausgelegt ist, aus Parametern, die nicht zu den Parametern gehören, welche die Anpassungsparametergruppe bilden, unter Parametern des Klimaanlagenmodells (191) jeden Parameter auszuwählen, der eine zusätzliche Parametergruppe bildet, die aus mindestens einem Parameter besteht, dessen Wert ein Kandidat ist, um angepasst zu werden, wenn das Klimaanlagenmodell (191) kalibriert wird, und der Anpassungsparametergruppe jeden Parameter hinzufügt, der die zusätzliche Parametergruppe bildet,
wobei eine Störungsdiagnoseeinheit (150) dazu ausgelegt ist, die Störung in der Klimaanlage (200) auf der Grundlage eines Ergebnisses der Kalibrierung des Klimaanlagenmodells (191) zu diagnostizieren.

2. Störungsdiagnosevorrichtung (100) nach Anspruch 1, ferner umfassend:
eine Parameterdefinitions-Aktualisierungseinheit (140), die, wenn ein Wert jeglichen Parameters, der die zusätzliche Parametergruppe bildet, angepasst wurde, dazu ausgelegt ist, zu der Parameterdefinitionsdatenbank (193) jeden Parameter, dessen Wert angepasst wurde und der die zusätzliche Parametergruppe bildet, als einen Anpassungsparameter entsprechend einem Zustand gemäß der kalibrierten Simulation hinzuzufügen.

3. Störungsdiagnosevorrichtung (100) nach Anspruch 1 oder 2, ferner umfassend:
eine Parameteranpassungseinheit (113), die dazu ausgelegt ist, als ein Kundenumgebungsmodell (192) ein Klimaanlagenmodell (191) bereitzuhalten, das in einem Fall kalibriert wird, in dem der Zustand der Klimaanlage (200) ein Zustand ist, in dem angenommen wird, dass die Klimaanlage (200) keine Störung hat, und
einen Parameterwert, der in dem Kundenumgebungsmodell (192) angegeben ist, als einen Anfangswert zu verwenden, wenn das Klimaanlagenmodell (191) in dem Fall kalibriert wird, in dem der Zustand der Klimaanlage (200) der Zustand ist, in dem angenommen wird, dass die Klimaanlage (200) keine Störung aufweist.

4. Störungsdiagnosevorrichtung (100) nach einem der Ansprüche 1 bis 3, ferner umfassend:
eine Parameterfestlegungseinheit (170), die dazu ausgelegt ist, einen Wert von mindestens einem Parameter des Klimaanlagenmodells (191) festzulegen, wobei
die Parameterauswahleinheit (130) jeden Parameter, dessen Wert festgelegt wurde, aus der Anpassungsparametergruppe ausschließt.

5. Störungsdiagnoseverfahren, das ein Klimaanlagenmodell (191) kalibriert, indem mindestens ein Wert von mindestens einem Parameter des Klimaanlagenmodells (191) angepasst wird, das verwendet wird, wenn eine Simulation eines Betriebs einer Klimaanlage (200) ausgeführt wird, wobei das Störungsdiagnoseverfahren umfasst:
durch einen Computer, Auswählen aus Parametern des Klimaanlagenmodells (191) jedes Parameters, der eine Anpassungsparametergruppe bildet, die aus mindestens einem Parameter besteht, dessen Wert ein Kandidat ist, um angepasst zu werden, wenn das Klimaanlagenmodell (191) auf der Grundlage von Bedingungen gemäß einem Zustand der Klimaanlage (200) kalibriert wird,
durch den Computer, beim Auswählen jedes Parameters, der die Anpassungsparametergruppe bildet, Bezugnehmen auf eine Parameterdefinitionsdatenbank (193), die zumindest einen Anpassungsparameter aufzeichnet, der ein Parameter ist, der jeder Bedingung gemäß dem Zustand der Klimaanlage (200) entspricht, und der ein Parameter ist, dessen Wert ein Kandidat ist, um angepasst zu werden, wenn das Klimaanlagenmodell (191) kalibriert wird, und
durch den Computer, wenn eine Differenz zwischen Betriebsdaten der Klimaanlage (200), die ein Ergebnis der Ausführung der kalibrierten Simulation anzeigen, bei der es sich um die Simulation des Betriebs der Klimaanlage (200) unter Verwendung des Klimaanlagenmodells (191) handelt, das durch Anpassen eines Werts jedes Parameters, der die Anpassungsparametergruppe bildet, kalibriert wurde, und tatsächlichen Betriebsdaten der Klimaanlage (200) entsprechend der kalibrierten Simulation gleich oder größer als ein Schwellenwert ist, Auswählen aus Parametern, die nicht zu den Parametern gehören, welche die Anpassungsparametergruppe bilden, unter Parametern des Klimaanlagenmodells (191), jedes Parameters, der eine zusätzliche Parametergruppe bildet, die aus mindestens einem Parameter besteht, dessen Wert ein Kandidat ist, um angepasst zu werden, wenn das Klimaanlagenmodell (191) kalibriert wird, und Hinzufügen zu der Anpassungsparametergruppe, jedes Parameters, der die zusätzliche Parametergruppe bildet,
wobei die Störung in der Klimaanlage (200) auf der Grundlage eines Ergebnisses der Kalibrierung des Klimaanlagenmodells (191) diagnostiziert wird.

6. Störungsdiagnoseprogramm zum Veranlassen einer Störungsdiagnosevorrichtung (100), welche ein Computer ist, der ein Klimaanlagenmodell (191) kalibriert, durch Anpassen zumindest eines Wertes zumindest eines Parameters des Klimaanlagenmodells (191), das genutzt wird, wenn eine Simulation eines Betriebs einer Klimaanlage (200) ausgeführt wird, um einen Parameterauswahlprozess auszuführen, um, unter Parametern des Klimaanlagenmodells (191), jeden Parameter auszuwählen, der eine Anpassungsparametergruppe bildet, die aus mindestens einem Parameter besteht, dessen Wert ein Kandidat ist, um angepasst zu werden, wenn das Klimaanlagenmodell (191) auf der Grundlage von Bedingungen gemäß einem Zustand der Klimaanlage (200) kalibriert wird, wobei
bei der Auswahl jedes Parameters, der die Anpassungsparametergruppe bildet, der Parameterauswahlprozess auf eine Parameterdefinitionsdatenbank (193) Bezug nimmt, die mindestens einen Anpassungsparameter aufzeichnet, der ein Parameter ist, der jeder Bedingung gemäß dem Zustand der Klimaanlage (200) entspricht, und der ein Parameter ist, dessen Wert ein Kandidat ist, um angepasst zu werden, wenn das Klimaanlagenmodell (191) kalibriert wird, und
wenn eine Differenz zwischen Betriebsdaten der Klimaanlage (200), die ein Ergebnis der Ausführung der kalibrierten Simulation anzeigen, bei der es sich um die Simulation des Betriebs der Klimaanlage (200) unter Verwendung des Klimaanlagenmodells (191) handelt, das durch Anpassen eines Werts jedes Parameters, der die Anpassungsparametergruppe bildet, kalibriert wurde, und tatsächlichen Betriebsdaten der Klimaanlage (200) entsprechend der kalibrierten Simulation gleich oder größer als ein Schwellenwert ist, der Parameterauswahlprozess aus Parametern, die nicht zu den Parametern gehören, welche die Anpassungsparametergruppe bilden, unter Parametern des Klimaanlagenmodells (191) jeden Parameter auswählt, der eine zusätzliche Parametergruppe bildet, die aus mindestens einem Parameter besteht, dessen Wert ein anzupassender Kandidat ist, wenn das Klimaanlagenmodell (191) kalibriert wird, und der Anpassungsparametergruppe jeden Parameter hinzufügt, der die zusätzliche Parametergruppe bildet,
wobei die Störung in der Klimaanlage (200) auf der Grundlage eines Ergebnisses der Kalibrierung des Klimaanlagenmodells (191) diagnostiziert wird.

## Revendications

1. Appareil de diagnostic de panne (100) qui est adapté pour étalonner un modèle de climatiseur (191) en ajustant au moins une valeur d'au moins un paramètre du modèle de climatiseur (191) utilisé lorsqu'une simulation de fonctionnement d'un climatiseur (200) est exécutée, l'appareil de diagnostic de panne (100) comprenant
une unité de sélection de paramètre (130) adaptée pour sélectionner parmi des paramètres du modèle de climatiseur (191) chaque paramètre qui forme un groupe de paramètres d'ajustement qui consiste en au moins un paramètre dont la valeur est candidate pour être ajustée lorsque le modèle de climatiseur (191) est étalonné sur la base de conditions selon un état du climatiseur (200), dans lequel
lors de la sélection de chaque paramètre qui forme le groupe de paramètres d'ajustement, l'unité de sélection de paramètre (130) est adaptée pour se référer à une base de données de définition de paramètre (193) qui enregistre au moins un paramètre d'ajustement qui est un paramètre correspondant à chaque condition en fonction de l'état du climatiseur (200) et qui est un paramètre dont la valeur est candidate pour être ajustée lorsque le modèle de climatiseur (191) est étalonné, et
lorsqu'une différence entre des données de fonctionnement du climatiseur (200), indiquant un résultat de l'exécution de la simulation étalonnée qui est la simulation du fonctionnement du climatiseur (200) à l'aide du modèle de climatiseur (191) étalonné en ajustant une valeur de chaque paramètre qui forme le groupe de paramètres d'ajustement, et des données de fonctionnement réel du climatiseur (200) correspondant à la simulation étalonnée est égale ou supérieure à une valeur de seuil, l'unité de sélection de paramètre (130) est adaptée pour sélectionner, parmi des paramètres autres que les paramètres qui forment le groupe de paramètres d'ajustement parmi des paramètres du modèle de climatiseur (191), chaque paramètre qui forme un groupe de paramètres supplémentaire qui consiste en au moins un paramètre dont la valeur est candidate pour être ajustée lorsque le modèle de climatiseur (191) est étalonné, et ajoute au groupe de paramètres d'ajustement chaque paramètre qui forme le groupe de paramètres supplémentaire,
dans lequel une unité de diagnostic de panne (150) est adaptée pour diagnostiquer la panne dans le climatiseur (200) sur la base d'un résultat d'étalonnage du modèle de climatiseur (191).

2. Appareil de diagnostic de panne (100) selon la revendication 1, comprenant en outre :
une unité de mise à jour de définition de paramètre (140), lorsqu'une valeur de tout paramètre qui forme le groupe de paramètres supplémentaire a été ajustée, adaptée pour ajouter à la base de données de définition de paramètre (193) chaque paramètre dont la valeur a été ajustée et qui forme le groupe de paramètres supplémentaire, en tant que paramètre d'ajustement correspondant à une condition selon la simulation étalonnée.

3. Appareil de diagnostic de panne (100) selon la revendication 1 ou 2, comprenant en outre
une unité d'ajustement de paramètre (113) adaptée pour contenir en tant que modèle d'environnement client (192) un modèle de climatiseur (191) étalonné dans un cas où l'état du climatiseur (200) est un état dans lequel le climatiseur (200) est supposé ne pas avoir de panne, et
pour utiliser une valeur de paramètre indiquée dans le modèle d'environnement client (192) en tant que valeur initiale lorsque le modèle de climatiseur (191) est étalonné dans le cas où l'état du climatiseur (200) est l'état dans lequel le climatiseur (200) est supposé ne pas avoir de panne.

4. Appareil de diagnostic de panne (100) selon l'une quelconque des revendications 1 à 3, comprenant en outre
une unité de réglage de paramètre (170) adaptée pour régler une valeur d'au moins un paramètre du modèle de climatiseur (191), dans lequel
l'unité de sélection de paramètre (130) exclut du groupe de paramètres d'ajustement chaque paramètre dont la valeur a été réglée.

5. Procédé de diagnostic de panne qui étalonne un modèle de climatiseur (191) en ajustant au moins une valeur d'au moins un paramètre du modèle de climatiseur (191) utilisé lorsqu'une simulation de fonctionnement d'un climatiseur (200) est exécutée, le procédé de diagnostic de panne comprenant les étapes consistant à
par l'intermédiaire d'un ordinateur, en sélectionner parmi des paramètres du modèle de climatiseur (191) chaque paramètre qui forme un groupe de paramètres d'ajustement qui consiste en au moins un paramètre dont la valeur est candidate pour être ajustée lorsque le modèle de climatiseur (191) est étalonné sur la base de conditions selon un état du climatiseur (200),
par l'intermédiaire de l'ordinateur, lors de la sélection de chaque paramètre qui forme le groupe de paramètres d'ajustement, se référer à une base de données de définition de paramètre (193) qui enregistre au moins un paramètre d'ajustement qui est un paramètre correspondant à chaque condition en fonction de l'état du climatiseur (200) et qui est un paramètre dont la valeur est candidate pour être ajustée lorsque le modèle de climatiseur (191) est étalonné, et
par l'intermédiaire de l'ordinateur, lorsqu'une différence entre des données de fonctionnement du climatiseur (200), indiquant un résultat de l'exécution de la simulation étalonnée qui est la simulation du fonctionnement du climatiseur (200) à l'aide du modèle de climatiseur (191) étalonné en ajustant une valeur de chaque paramètre qui forme le groupe de paramètres d'ajustement, et des données de fonctionnement réel du climatiseur (200) correspondant à la simulation étalonnée est égale ou supérieure à une valeur de seuil, sélectionner, parmi des paramètres autres que les paramètres qui forment le groupe de paramètres d'ajustement parmi des paramètres du modèle de climatiseur (191), chaque paramètre qui forme un groupe de paramètres supplémentaire qui consiste en au moins un paramètre dont la valeur est candidate pour être ajustée lorsque le modèle de climatiseur (191) est étalonné, et ajouter au groupe de paramètres d'ajustement chaque paramètre qui forme le groupe de paramètres supplémentaire,
dans lequel la panne du climatiseur (200) est diagnostiquée sur la base d'un résultat d'étalonnage du modèle de climatiseur (191).

6. Programme de diagnostic de panne pour amener un appareil de diagnostic de panne (100), qui est un ordinateur qui étalonne un modèle de climatiseur (191) en ajustant au moins une valeur d'au moins un paramètre du modèle de climatiseur (191) utilisé lorsqu'une simulation de fonctionnement d'un climatiseur (200) est exécutée, à exécuter
un processus de sélection de paramètre pour sélectionner parmi des paramètres du modèle de climatiseur (191) chaque paramètre qui forme un groupe de paramètres d'ajustement qui consiste en au moins un paramètre qui est candidat pour être ajusté lorsque le modèle de climatiseur (191) est étalonné sur la base de conditions selon un état du climatiseur (200), dans lequel
lors de la sélection de chaque paramètre qui forme le groupe de paramètres d'ajustement, le processus de sélection de paramètre se réfère à une base de données de définition de paramètre (193) qui enregistre au moins un paramètre d'ajustement qui est un paramètre correspondant à chaque condition en fonction de l'état du climatiseur (200) et qui est un paramètre dont la valeur est candidate pour être ajustée lorsque le modèle de climatiseur (191) est étalonné, et
lorsqu'une différence entre des données de fonctionnement du climatiseur (200), indiquant un résultat de l'exécution de la simulation étalonnée qui est la simulation du fonctionnement du climatiseur (200) à l'aide du modèle de climatiseur (191) étalonné en ajustant une valeur de chaque paramètre qui forme le groupe de paramètres d'ajustement, et des données de fonctionnement réel du climatiseur (200) correspondant à la simulation étalonnée est égale ou supérieure à une valeur de seuil, le processus de sélection de paramètre sélectionne, parmi des paramètres autres que les paramètres qui forment le groupe de paramètres d'ajustement parmi des paramètres du modèle de climatiseur (191), chaque paramètre qui forme un groupe de paramètres supplémentaire qui consiste en au moins un paramètre dont la valeur est candidate pour être ajustée lorsque le modèle de climatiseur (191) est étalonné, et ajoute au groupe de paramètres d'ajustement chaque paramètre qui forme le groupe de paramètres supplémentaire,
dans lequel la panne du climatiseur (200) est diagnostiquée sur la base d'un résultat d'étalonnage du modèle de climatiseur (191).
